# EUROPEAN PATENT APPLICATION

(11) **EP 4 641 823 A1**
(43) Date of publication of application: **29.10.2025**
(21) Application number: 24852102.3
(22) Date of filing: 16.07.2024
(51) Int. Cl.: H01M 50/593, H01M 50/588, H01M 50/502, H01M 50/211, H01M 10/04

(54) **BATTERY MODULE AND BATTERY PACK INCLUDING SAME**

(30) Priority: 09.08.2023 KR 20230104307
(71) Applicant: LG Energy Solution, Ltd., Seoul 07335 (KR)
(72) Inventor: LEE, Wonjin, Daejeon 34122 (KR)
(74) Representative: BCKIP Part mbB
(86) International application number: PCT/KR2024/010149
(87) International publication number: WO 2025/033746

(57) **Abstract**

A battery module includes a battery cell stack in which a plurality of battery cells are stacked; a module case accommodating the battery cell stack; a terminal busbar disposed on one side of the battery cell stack; an insulation cover disposed on one side of the module case, one end portion of the terminal busbar being positioned at the insulation cover; and a rib disposed at the insulation cover, the rib protruding upward outside the one end portion of the terminal busbar.

## Description

### [TECHNICAL FIELD]

The present invention relates to a battery module and a battery pack including the battery module, and more specifically, to a battery module and a battery pack including the battery module capable of ensuring safety of workers during manufacturing of the battery module and the battery pack.

### [BACKGROUND ART]

Unlike primary batteries, which cannot be recharged, secondary batteries refer to batteries that may be charged and discharged, and they are applied not only to portable devices but also to electric vehicles ("EVs") and hybrid vehicles ("HEVs") that are driven by an electrical drive source.

Types of secondary batteries currently in wide use may include lithium ion batteries, lithium polymer batteries, nickel cadmium batteries, nickel hydrogen batteries, and nickel zinc batteries. An operating voltage of such a unit secondary battery cell, that is, a unit battery cell, is approximately 2.5V to 4.6V. Accordingly, when a higher output voltage is required, a battery pack is formed by connecting multiple battery cells in series. Additionally, a battery pack may be configured by connecting multiple battery cells in parallel depending on the charge/discharge capacity required for the battery pack. Accordingly, the number of battery cells included in the battery pack may be set in various ways depending on the required output voltage or charge/discharge capacity.

When configuring a battery pack by connecting a plurality of battery cells in series/parallel, generally, a battery module consisting of at least one battery cell, preferably a plurality of battery cells, is first constructed, and a battery pack is constructed by using at least one such battery module and adding other components. Here, the battery module refers to a component in which multiple battery cells are connected in series or parallel, and the battery pack refers to a component in which multiple battery modules are connected in series or parallel to increase capacity, output and the like.

A battery module may be configured by electrically connecting a plurality of cells using a busbar.

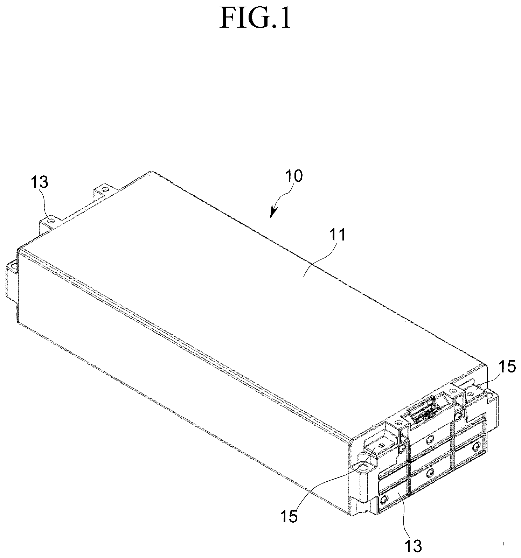

Such a conventional battery module is illustrated in FIG. 1. The battery module 10 illustrated in FIG. 1 includes a battery cell stack, a module case 11 accommodating the battery cell stack, a busbar frame disposed on a front surface and/or a rear surface of the battery cell stack, an end plate 13 disposed on the front surface and the rear surface of the module case 11, and a terminal busbar 15.

The battery cell stack is configured such that a plurality of electrically connected battery cells are stacked along one direction and accommodated in the module case 11. A busbar frame is disposed on the front surface and/or the rear surface of the battery cell stack. In the battery cell stack, the battery cells may be pouch-type battery cells.

The battery cell stack is accommodated in the module case 11, and the end plate 13 is coupled to the front surface and the rear surface of the module case 11 to cover the front surface and the rear surface of the module case 11. The terminal busbar 15 is configured to electrically connect one battery module 10 to another battery module 10, and a portion of the terminal busbar 15 is exposed to the outside of the end plate 13 so as to be connected to another battery module 10.

However, in such a battery module 10, one end of the terminal busbar 15 is exposed to the outside so as to be connected to another battery module 10, and there is a concern that a worker's hand may come into contact with the exposed end of the terminal busbar 15, which may cause a safety accident.

### [DETAILED DESCRIPTION OF THE INVENTION]

### [TECHNICAL OBJECTIVES]

The present invention is intended to solve the problems described above, and is directed to providing a battery module and a battery pack including the battery module capable of preventing safety accidents of workers.

### [TECHNICAL MEANS]

A battery module according to the present invention includes: a battery cell stack in which a plurality of battery cells are stacked; a module case accommodating the battery cell stack; a terminal busbar disposed on one side of the battery cell stack; an insulation cover disposed on one side of the module case, one end portion of the terminal busbar being positioned at the insulation cover; and a rib disposed at the insulation cover, the rib protruding upward outside the one end portion of the terminal busbar.

Furthermore, the rib may be formed unitarily with the insulation cover.

Furthermore, the rib may be disposed at an edge of the insulation cover that extends along a longitudinal direction of the battery module.

Furthermore, the rib may be inclined upward.

Furthermore, the rib may be flexible.

Furthermore, the insulation cover may include a mounting portion on which the one end portion of the terminal busbar is mounted.

Furthermore, the rib may be disposed on an edge of the mounting portion.

Furthermore, the mounting portion may include: a mounting surface portion on which the one end portion of the terminal busbar is mounted; and an edge portion disposed outside the mounting surface portion.

Furthermore, the edge portion of the mounting portion may include: a first edge portion positioned on a side edge of the mounting portion; and a second edge portion positioned on a front edge of the mounting portion.

Furthermore, the rib may be disposed at the first edge portion.

Furthermore, the battery module may further include a terminal cover configured to cover the one end portion of the terminal busbar.

Furthermore, the terminal cover may be configured to be openable and closable.

Furthermore, the terminal cover may be configured to be rotatable about a rotation axis.

Furthermore, the rotation axis may be disposed in parallel to a width direction of the battery module.

Furthermore, the battery module may further include an opening between a side edge of the insulation cover that extends along a longitudinal direction of the battery module and the terminal cover.

Furthermore, the rib may protrude toward the opening.

Furthermore, a pack busbar may be connected to the one end portion of the terminal cover.

Furthermore, the insulation cover may include an opening, and the one end portion of the terminal busbar may be exposed through the opening.

Furthermore, the battery module may further include an end plate disposed on a front surface or a rear surface of the module case, wherein the end plate may be disposed outside the insulation cover.

Furthermore, a battery pack according to the present invention includes the battery module.

### [EFFECT OF THE INVENTION]

A battery module and a battery pack according to the present invention may ensure safety of workers by preventing their fingers from approaching a terminal busbar during product assembly or A/S works and may stably maintain quality of the battery module.

### [BRIEF DESCRIPTION OF THE DRAWINGS]

FIG. 1 is a perspective view illustrating a conventional battery module,
FIG. 2 is a perspective view illustrating a battery module according to the present invention,
FIG. 3 is an exploded perspective view illustrating a battery module according to the present invention,
FIG. 4 is a perspective view illustrating a battery cell according to the present invention,
FIG. 5 is a perspective view illustrating a terminal busbar according to the present invention,
FIG. 6 is a perspective view illustrating an insulation cover and an end plate according to the present invention,
FIG. 7 is an enlarged view illustrating a portion of an insulation cover exposed through an opening in an end plate according to the present invention,
FIG. 8 is a side view of FIG. 7,
FIG. 9 is a view illustrating that access of a worker's finger is prevented in a battery module according to the present invention, and
FIG. 10 is a view illustrating that a pack busbar is connected to a battery module according to the present invention.

### [MODES FOR IMPLEMENTING THE INVENTION]

The advantages and features of the present invention and methods for achieving them will become clear by referring to the embodiments described in detail below along with the accompanying drawings. However, the present invention is not limited to the embodiments disclosed below and will be implemented in various different forms, the present embodiments only serve to ensure that the disclosure of the present invention is complete, it is provided to fully inform those who have common knowledge in the technical field to which the present invention pertains, and the present invention is to be only defined by the scope of the claims. Accordingly, in some embodiments, well-known process steps, well-known device structures, and well-known techniques are not specifically described in order to avoid ambiguous interpretation of the present invention. Like reference numerals refer to like elements throughout the specification.

In order to clearly express multiple layers and areas in the drawing, the thickness may be enlarged. Throughout the specification, similar parts are given the same reference numerals. When a part of a layer, film, region, plate and the like is said to be "on" another part, this includes not only being "directly on" another part, but also cases where there is another part therebetween. Conversely, when a part is said to be "directly on" another part, it means that there is no other part therebetween. Additionally, when a part of a layer, film, region, plate and the like is said to be "beneath" another part, this includes not only cases where it is "directly beneath" another part, but also cases where there is another part therebetween. Conversely, when a part is said to be "directly beneath" another part, it means that there is no other part therebetween.

A battery module 1000 according to the present invention will be described in detail with reference to the drawings.

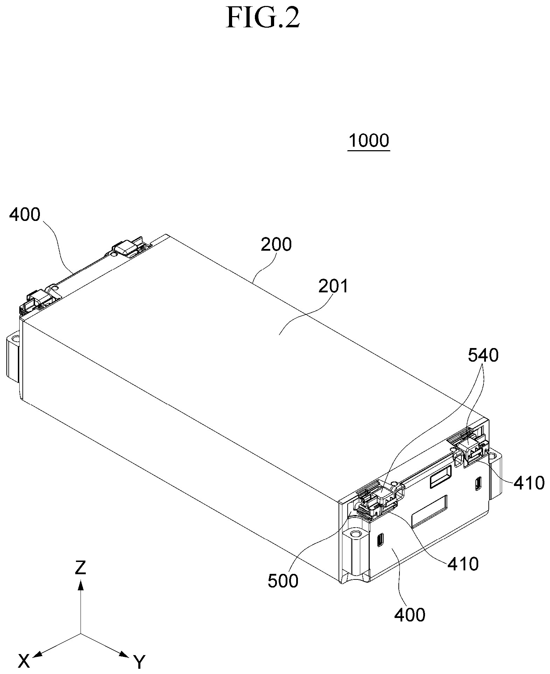

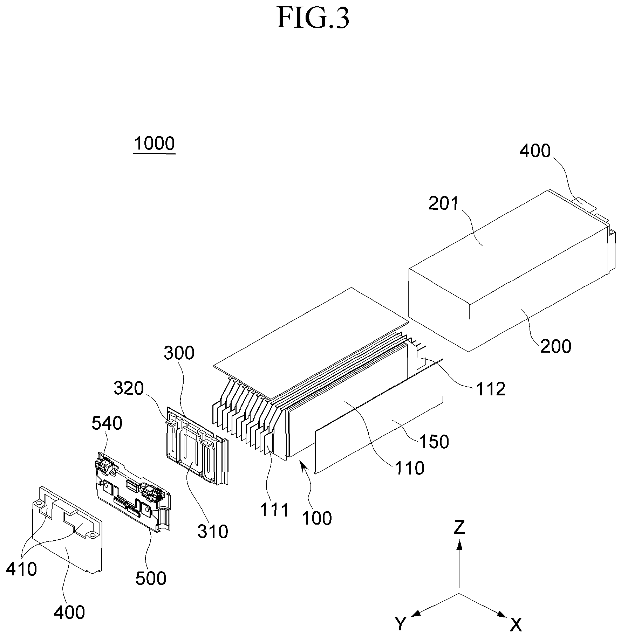

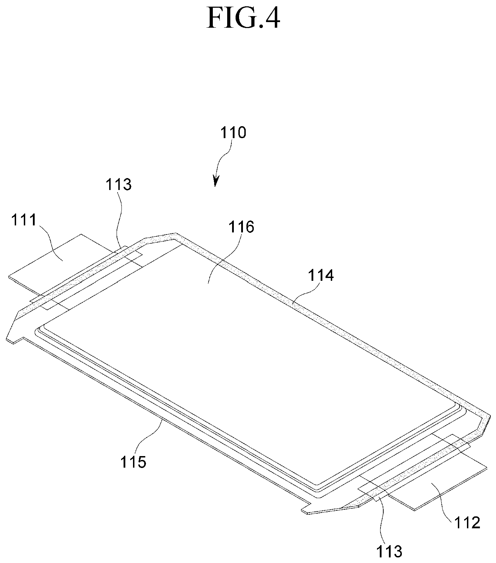

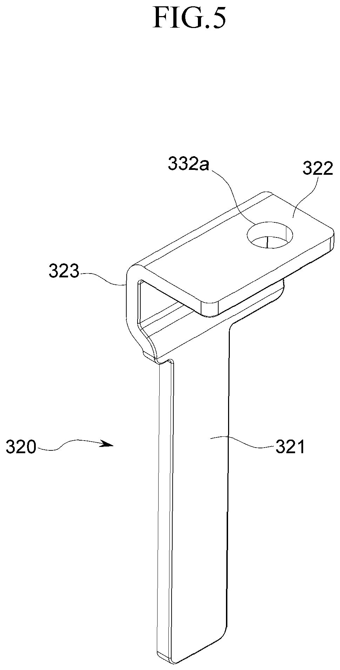

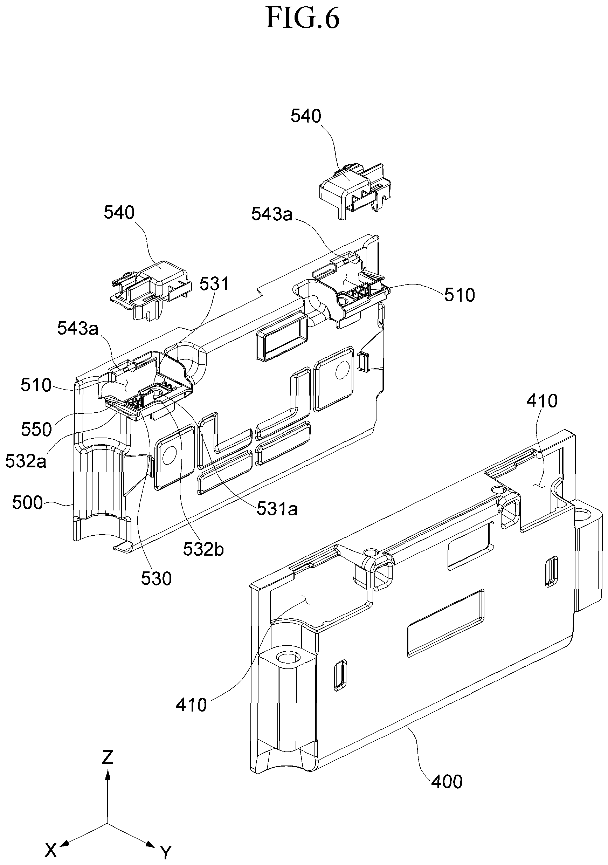

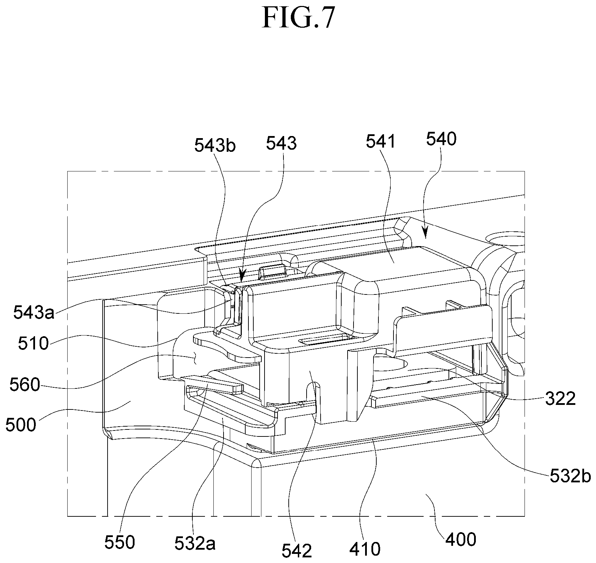

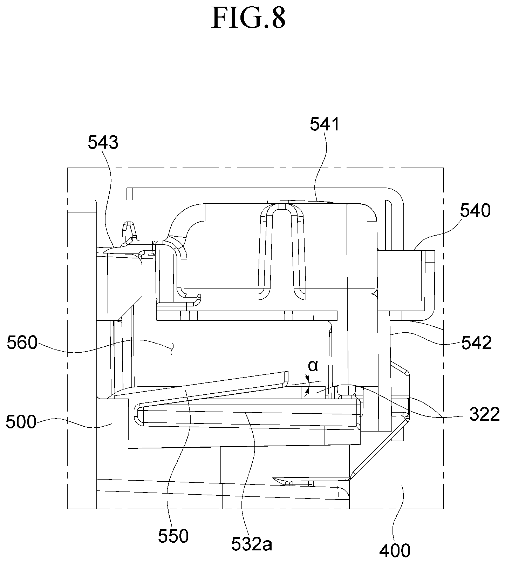

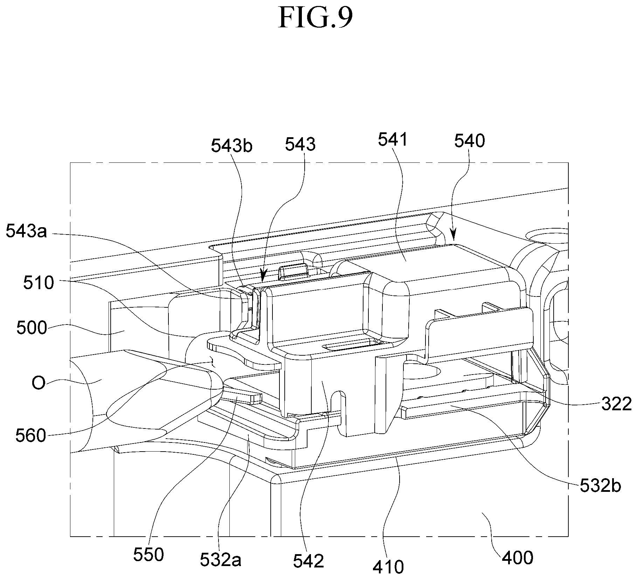

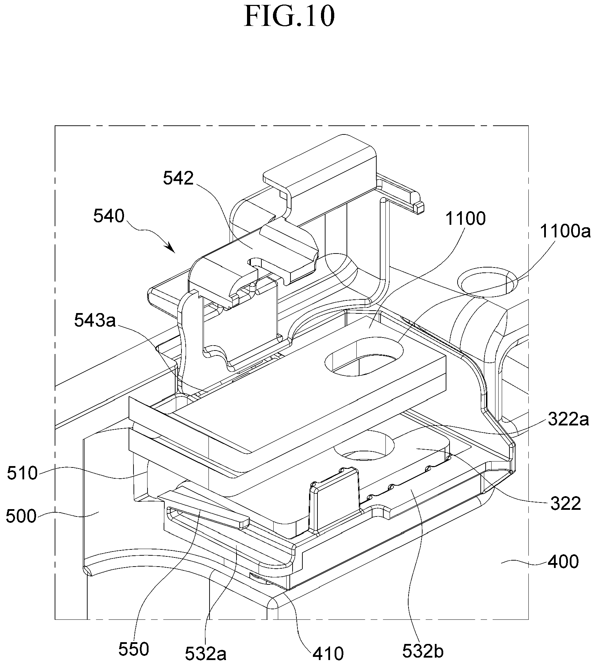

FIG. 2 is a perspective view illustrating a battery module according to the present invention, FIG. 3 is an exploded perspective view illustrating a battery module according to the present invention, FIG. 4 is a perspective view illustrating a battery cell according to the present invention, FIG. 5 is a perspective view illustrating a terminal busbar according to the present invention, FIG. 6 is a perspective view illustrating an insulation cover and an end plate according to the present invention, FIG. 7 is an enlarged view illustrating a portion of an insulation cover exposed through an opening in an end plate according to the present invention, FIG. 8 is a side view of FIG. 7, FIG. 9 is a view illustrating that access of a worker's finger is prevented in a battery module according to the present invention, and FIG. 10 is a view illustrating that a pack busbar is connected to a battery module according to the present invention.

The battery module 1000 according to the present invention may include a battery cell stack 100 in which a plurality of battery cells 110 are stacked, a module case 200 accommodating the battery cell stack 100, a busbar frame 300 disposed on a front surface and/or a rear surface of the battery cell stack 100, an end plate 400 covering the front surface and/or the rear surface of the battery cell stack 100, and busbars 310, 320 mounted on the busbar frame 300.

The battery cell stack 100 may be formed by stacking the plurality of battery cells 110 along a direction, and the plurality of battery cells 110 may be electrically connected to each other. The direction in which the plurality of battery cells 110 are stacked may be an X-axis direction (or a -X-axis direction) in FIG. 3.

A direction from the front surface to the rear surface of the battery cell stack 100, or an opposite direction thereto, may be defined as a longitudinal direction of the battery cell stack 100, and may be a Y-axis direction in the drawing. In addition, a direction from an upper surface to a lower surface of the battery cell stack 100, or an opposite direction thereto, may be defined as a width direction of the battery cell stack 100, and may be a Z-axis direction in the drawing.

The longitudinal direction of the battery cell stack 100 may be substantially the same as a longitudinal direction of the battery cell 110. Electrode leads 111, 112 of the battery cell 110 may be disposed on the front surface and the rear surface of the battery cell stack 100, and the busbars 310, 320 of the battery module 1000 may be disposed close to the front surface and the rear surface of the battery cell stack 100 to readily form an electrical connection with the electrode leads 111, 112.

The battery cell 110 may be provided as a pouch-type battery cell, and the number of battery cells stacked per unit area may be maximized in the pouch-type battery cell. However, the battery cell 110 does not necessarily have to be provided in a pouch-type, and may be provided in a polygonal, cylindrical, or other various shapes.

The battery cell 110 provided in a pouch-type may include an electrode assembly and a cell case 115 accommodating the electrode assembly (see FIG. 4).

The cell case 115 of the battery cell 110 may be a pouch-type cell case 115 for accommodating the electrode assembly. The cell case 115 may include a lower case and an upper case covering the lower case, and the upper and lower cases may be formed unitarily as one piece. In addition, as illustrated in FIG. 4, connecting portions of the upper and lower cases may be formed in a structure in which they are bent and folded. In addition, as illustrated, the upper case may completely cover the lower case, and a sealing portion 114 may be formed in a peripheral area.

The upper and lower cases may both be formed in a laminate structure including an inner cover layer, a metal layer, and an outer cover layer. The inner cover layer which is located at the inner side the cell case 115 with respect to the metal layer may be required to have insulation and electrolytic resistance because it directly contacts the electrode assembly and to have sealing properties to be sealed from the outside, that is, a sealing portion where inner layers are thermally attached should have excellent thermal bonding strength. The metal layer located between the inner cover layer and the outer cover layer serves as a barrier layer that prevents moisture or various gases from penetrating into the battery from the outside, and a preferable material for the metal layer in contact with the inner cover layer may use an aluminum (Al) thin film that is lightweight and has excellent formability. The outer cover layer is located at the outer side of the cell case 115 with respect to the metal layer, and the outer cover layer may use a heat-resistant polymer with excellent characteristics in terms of tensile strength, moisture permeability, and air permeability to protect the electrode assembly while ensuring heat resistance and chemical resistance, and for example, nylon or polyethylene terephthalate may be used.

An accommodation recess 116 may be formed in each of the upper and lower cases, and the electrode assembly may be accommodated in the accommodation recess 116 of the upper and lower cases.

The electrode assembly accommodated in the cell case 115 may be one of the group consisting of a jelly-roll type electrode assembly having a structure in which a separator is disposed between elongated sheet-shaped anode and cathode and then rolled up, a stack type electrode assembly consisting of unit cells having a structure in which rectangular anode and cathode are stacked with a separator disposed therebetween, a stack-folding type electrode assembly in which unit cells are rolled up by an elongated separator film, and a lamination-stack type electrode assembly in which unit cells are stacked with a separator disposed therebetween and attached to each other.

In addition, the electrode assembly may include two electrode tabs and two electrode leads 111, 112 connected to the electrode tabs, respectively, by a welding portion.

One electrode lead 111 or 112 of the two electrode leads 111, 112 may be an anode lead connected to an anode tab, and the other electrode lead 111 or 112 may be a cathode lead connected to a cathode tab.

A lead film 113 may be attached to each of the electrode leads 111, 112. The lead film 113 coupled to the electrode leads 111, 112 may be disposed between the electrode leads 111, 112 and the cell case 115 to prevent a short circuit from occurring between the electrode leads 111, 112 and the cell case 115 and to improve sealing force, thereby preventing leakage of an electrolyte and the like.

Although the two electrode leads 111, 112 are illustrated as being disposed on opposite sides of the electrode assembly, respectively, the two electrode leads 111, 112 may be disposed on only one side of the electrode assembly depending on the arrangement of the electrode tabs.

The module case 200 may be configured to protect the battery cell stack 100 and electrical components connected thereto from external physical impact, and the module case 200 may accommodate the battery cell stack 100 and the electrical components connected thereto in an internal space of the module case 200.

A structure of the module case 200 may vary, and for example, the structure of the module case 200 may be a mono-frame structure. Here, the mono-frame may be in the form of a metal plate in which an upper surface, a lower surface, and opposite side surfaces are unitarily formed. The mono-frame may be manufactured by extrusion molding. As another example, the module case 200 may have a structure in which a U-shaped frame and an upper plate (upper surface) 201 are coupled to each other. In the case of the structure in which the U-shaped frame and the upper plate are coupled to each other, the structure of the module case 200 may be formed by coupling the upper plate onto an upper side of the U-shaped frame which is a metal plate where a lower surface and opposite side surfaces are coupled to each other or unitarily formed, and each frame or plate may be manufactured by press molding. In addition, the structure of the module case 200 may be provided as an L-shaped frame structure in addition to the mono-frame or the U-shaped frame, and may be provided as various structures not described in the above-described examples.

The structure of the module case 200 may be provided in the form that is open along the longitudinal direction of the battery cell stack 100. The front surface and the rear surface of the battery cell stack 100 may not be covered by the module case 200. The electrode leads 111, 112 of the battery cell 110 may not be covered by the module case 200. The front surface and the rear surface of the battery cell stack 100 may be covered by the busbar frame 300, the end plate 400, or the busbars 310, 320 to be described below, and accordingly, the front surface and the rear surface of the battery cell stack 100 may be protected from external physical impacts and the like.

A compression pad 150 may be disposed between the battery cell stack 100 and one side surface of inner surfaces of the module case 200.

The compression pad 150 may be disposed so as to face the battery cell 110 located at an outermost side of the battery cell stack 100 in the y-axis direction in the drawing.

Also, a thermally conductive resin may be injected between the battery cell stack 100 and the inner surface of the module case 200, and a thermally conductive resin layer may be formed between the battery cell stack 100 and one side surface of the inner surfaces of the module case 200 by the injected thermally conductive resin. In such a case, the thermally conductive resin layer may be disposed on the Z-axis of the battery cell stack 100, and thermally conductive resin layer may be formed between the battery cell stack 100 and the bottom surface of the module case 200 on the -Z-axis.

The busbar frame 300 may be disposed on one surface of the battery cell stack 100 and may cover one surface of the battery cell stack 100 while guiding connection between the battery cell stack 100 and an external device. Specifically, the busbar frame 300 may be disposed on the front surface or the rear surface of the battery cell stack 100, as illustrated. At least one of the busbars 310, 320 and a module connector may be mounted on the busbar frame 300. As illustrated in FIG. 3, one surface of the busbar frame 300 may be connected to the front surface or the rear surface of the battery cell stack 100, and another surface of the busbar frame 300 may be connected to the busbars 310, 320.

The busbar frame 300 may include an electrically insulating material. The busbar frame 300 may restrict the busbars 310, 320 from contacting other portions of the battery cells 110 other than a portion where the busbars 310, 320 are connected to the electrode leads 111, 112 and may prevent an electrical short circuit from occurring.

The busbar frame 300 may be disposed on each of the front surface and the rear surface of the battery cell stack 100.

The busbars 310, 320 may be mounted on one surface of the busbar frame 300 and may serve to electrically connect the battery cell stack 100 or the battery cells 110 to an external device circuit. The busbars 310, 320 may be disposed between the battery cell stack 100 or the busbar frame 300 and the end plate 400, thereby being protected from external impacts and the like and minimizing degradation of durability due to external moisture and the like.

The busbars 310, 320 may be electrically connected to the battery cell stack 100 through the electrode leads 111, 112 of the battery cell 110.

Specifically, the electrode leads 111, 112 of the battery cell 110 may be bent and connected to the busbars 310, 320 after passing through a lead slit formed in the busbar frame 300. The battery cells 110 constituting the battery cell stack 100 may be connected in series or in parallel by the busbars 310, 320.

The busbars 310, 320 may include a terminal busbar 320 configured to electrically connect one battery module 1000 to another battery module 1000. At least a portion of the terminal busbar 320 may be exposed to the outside of the end plate 400 to be connected to another battery module 1000, and to this end, the end plate 400 may have a terminal opening 410.

The terminal busbar 320 may have one end portion (a second portion 322) exposed through an opening 510 of the insulation cover 500 and the terminal opening 410 of the end plate 400.

As illustrated in FIG. 5, the terminal busbar 320 may include a first portion 321 connected to the electrode leads 111, 112 of the battery cell 110 and the second portion 322 exposed to the outside through the terminal opening 410. In addition, the terminal busbar 320 may further include a bending portion 323 formed between the first portion 321 and the second portion 322.

In the terminal busbar 320, the first portion 321 may be connected to the second portion 322 through the bending portion, and one surface of the first portion 321 and one surface of the second portion 322 may be perpendicular to each other. That is, by forming the bending portion 323 that is bent in the terminal busbar 320, the second portion 322 may protrude such that the second portion 322 may be mounted on the mounting portion 530 of the insulation cover 500, and the second portion 322 may be electrically connected to the pack busbar 1100. A coupling hole 322a may be formed in the second portion 322 constituting one end portion of the terminal busbar 320, and the second portion 322 of the terminal busbar 320 may be secured by a pin or bolt inserted into the coupling hole 322a.

The end plate 400 may cover an open surface of the module case 200 to protect the battery cell stack 100 and electrical components connected thereto from external physical impact. To this end, the end plate 400 may be manufactured from a material having a predetermined strength, and for example, the end plate 400 may include a metal such as aluminum or a plastic material.

The end plate 400 may be formed with the terminal opening 410. The terminal opening 410 may be arranged on each of opposite sides of the end plate 400, and a portion of the insulation cover 500 and one end portion (the second portion 322) of the terminal busbar 320 may be exposed through the terminal opening 410.

In addition, a connector opening may be positioned between the terminal openings 410 located on the opposite sides of the end plate 400, and the module connector may be exposed to the outside through the connector opening.

The end plate 400 may be coupled to the module case 200 while covering the busbar frame 300 or the busbars 310, 320 located on one surface of the battery cell stack 100. Each corner of the end plate 400 may be coupled to a corresponding corner of the module case 200 by a method such as welding, bolting, or hook coupling.

The end plate 400 may be located on each of front and rear surfaces of the module case 200 so as to cover the front surface and the rear surface of the battery cell stack 100.

In addition, an insulation cover 500 for electrical insulation may be positioned between the end plate 400 and the busbar frame 300. That is, the busbar frame 300, the insulation cover 500, and the end plate 400 may be positioned sequentially from the battery cell stack 100 outward. Like the end plate 400, the busbar frame 300 and the insulation cover 500 may each be configured in plural.

The insulation cover 500 may include an electrically insulating material and may block the busbars 310, 320 from contacting the end plate 400.

The insulation cover 500 may include an opening 510 and a mounting portion 530. The opening 510 may be arranged on each of opposite sides of an upper portion of the insulation cover 500, and one end portion (the second portion 322) of the terminal busbar 320 may be exposed through the opening 510.

In addition, a connector opening may be positioned between the openings 510 located on the opposite sides of the insulation cover 500, and the module connector may be exposed to the outside through the connector opening.

The insulation cover 500 may be positioned on an inner surface of the end plate 400, and may be in close contact with the inner surface of the end plate 400, but this is not necessarily the case.

As described above, one end portion (the second portion 322) of the terminal busbar 320 may be exposed through the opening 510, and the exposed one end portion of the terminal busbar 320 may be mounted on the mounting portion 530. Accordingly, the mounting portion 530 may be disposed adjacent to the opening 510 and may be disposed on an upper outer surface.

The mounting portion 530 may have an upper surface on which the second portion 322 of the terminal busbar 320 may be mounted, and thus the upper surface of the mounting portion 530 may form a mounting surface. In addition, as illustrated in FIG. 6, the mounting portion 530 may include a securing portion 531 configured to secure the second portion 322 of the terminal busbar 320. The securing portion 531 may include a securing recess 531a, and a pin, a bolt, or the like inserted into a coupling recess 322a formed in the second portion 322 of the terminal busbar 320 may be secured by being joined to the securing recess 531a, such that the second portion 322 of the terminal busbar 320 together with the pack busbar 1100 may be secured to the securing portion 531.

The mounting portion 530 may be exposed to the outside through the terminal opening 410 of the end plate 400 in addition to the opening 510. The mounting portion 530 may be formed unitarily with the insulation cover 500 or may be in a separate form from the insulation cover 500 to be coupled to each other.

In addition, a terminal cover 540 covering the exposed one end portion of the terminal busbar 320 may be disposed at the insulation cover 500.

As illustrated in FIGS. 7 to 10, the terminal cover 540 may include an upper cover body 541 disposed at an upper portion of the terminal cover 540, a front cover body 542 disposed at a front portion of the terminal cover 540, and a hinge portion 543.

In the terminal cover 540, the upper cover body 541 may be upwardly spaced apart from one end portion of the terminal busbar 320 and may cover the one end portion (the second portion 322) of the terminal busbar 320 from above.

In the terminal cover 540, the front cover body 542 may be formed extending downward from a front edge of the upper cover body 541 and may be formed unitarily with the upper cover body 541. The front cover body 542 may be positioned between a front edge of the upper cover body 541 and the insulation cover 500.

The terminal cover 540 may be disposed so as to be openable and closable above the exposed one end portion (the second portion 322) of the terminal busbar 320 and may be disposed so as to be rotatable about a rotation axis on the insulation cover 500. FIGS. 7 to 9 are views illustrating the terminal cover 540 in a closed state, and FIG. 10 is a view illustrating the terminal cover 540 in an open state.

The rotation axis about which the terminal cover 540 rotates may be disposed in parallel to a width direction (X-axis direction) of the battery module. As another example, the rotation axis may be disposed in parallel to a length direction (Y-axis direction) of the battery module.

To this end, in the present embodiment, the hinge portion 543 may be disposed at a rear side of the terminal cover 540, and the terminal cover 540 may be hinge-coupled to the insulation cover 500 by the hinge portion 543. The hinge portion 543 may include a rotation portion 543b coupled to an outer periphery of a hinge pin 543a on the insulation cover 500 and rotatable around the hinge pin 543a. Herein, the hinge pin 543a may serve as a rotation axis of the terminal cover 540. The rotation portion 543b may be in the form of a complete circle or may be an arc member in the form of an arc.

As another example, the hinge portion 543 may include a hinge pin inserted into an insertion recess of the insulation cover 500 and rotatably coupled thereto, and this hinge pin may be disposed at the terminal cover 540.

According to this hinge coupling structure, the terminal cover 540 may be opened and closed, and the terminal cover 540 may open and close one end portion of the terminal busbar 320.

The terminal cover 540 according to another embodiment of the present invention may be hinge-coupled to the end plate 400, and the terminal opening 510 may be open or closed by the terminal cover 540 according to the hinge coupling structure.

Meanwhile, an opening 560 may be arranged in an open form between a side edge (an edge extending along the longitudinal direction (Y-axis direction) of the battery module 1000) of the upper cover body 541 and the insulation cover 500 (or the mounting portion 530).

The opening 560 may serve to connect the pack busbar 1100 to the terminal busbar 320 for inter-module connection.

The pack busbar 1100 which is a member for connecting the battery module 1000 to another battery module 1000 or a battery disconnect unit (BDU) may be connected to the exposed one end portion (a protrusion, the second portion 322) of the terminal busbar 320. For example, the pack busbar 1100 may overlap on the one end portion (the second portion 322) of the terminal busbar 320 to be connected thereto by bolting, welding, or other methods. After the pack busbar 1100 is connected to the terminal busbar 320, the terminal cover 540 may cover one end portion of the pack busbar 1100 connected to the second portion 322 of the terminal busbar 320.

The terminal busbar 320 may be connected to the pack busbar 1100 to form an electrical connection between modules, and in such a case, one end of the pack busbar 1100 inserted through the opening 560 between the upper cover body 541 and the insulation cover 500 may be connected to the terminal busbar 320.

In addition, the battery module 1000 of the present invention may include a rib 550.

The rib 550 may be disposed in the opening 560 to prevent safety accidents, and in this embodiment, the rib 550 may be configured, outside the terminal busbar 320 exposed through the terminal opening 510, in the form of a protrusion protruding from an upper portion of the insulation cover 500 toward the opening 560.

Specifically, the insulation cover 500 may include, at a portion exposed through the terminal opening 510, edge portions 532a, 532b located outside the mounting portion 530 on which one end portion of the terminal busbar 320 is mounted, and the edge portions 532a, 532b may include a first edge portion 532a which is a side edge of the mounting portion 530 and a second edge portion 532b which is a front edge of the mounting portion 530.

The first edge portion 532a may be an edge extending along the longitudinal direction (Y-axis direction) of the battery module 1000, and the second edge portion 532b may be an edge extending along the width direction (X-axis direction) of the battery module 1000.

In the present embodiment, the rib 550 may be disposed at the first edge portion 532a where the opening 560 is located. As illustrated in FIGS. 7 to 10, the rib 550 may be in the form protruding upward (in a direction toward the opening) from one end portion of the first edge portion 532a adjacent to the opening 510 and may be inclined upward from one end portion of the first edge portion 532a to anther end portion. An end portion of the rib 550 may be positioned above one end portion (the second portion 322) of the terminal busbar 320 when viewed from a side, as in FIG. 8.

As illustrated in FIG. 8, an upward angle α of the rib 550 inclined upward from the first edge portion 532a may be within a range from about 5 degrees to about 45 degrees, from about 5 degrees to about 30 degrees, or from about 5 degrees to about 15 degrees. In the present embodiment, the first edge portion 532a and the second portion 322 of the terminal busbar 320 or the mounting portion 530 may be disposed in parallel to each other. Accordingly, the upward angle α of the rib 550 may be the same as an angle formed by the rib 550 with respect to the second portion 322 of the terminal busbar 320 or the mounting portion 530.

The rib 550 may be formed in a straight shape as illustrated, or as another example, a portion of the rib 550 may be bent or curved.

Meanwhile, a pack busbar guide member 590 may be disposed on the second edge portion 532b, as illustrated in FIGS. 6 and 10. The pack busbar guide member 590 may be formed protruding upward from the second edge portion 532b located on the front outer side of one end portion of the terminal busbar 320, and may be disposed at a position in the second edge portion 532b adjacent to the first edge portion 532a. Specifically, a distance from the pack busbar guide member 590 to the first edge portion 532a may be less than a distance from the coupling hole 322a of the terminal busbar 320 to the first edge portion 532a.

The pack busbar guide member 590 may serve to guide or support the pack busbar 1100 when assembling the pack busbar 1100. In addition, when assembling the pack busbar 1100 to the terminal busbar 320 with a bolt or the like, the pack busbar 1100 may rotate, and the pack busbar guide member 590 may serve to prevent the rotation of the pack busbar 1100.

FIG. 9 is a view illustrating that access of a worker's finger is prevented in a battery module according to the present invention. In FIG. 9, a drawing reference O represents a test finger, which is a finger model (IPXXB) for verifying finger access safety specified in the International Protection Marking (IP) code (IEC60529).

When assembling the battery module 1000 or pack and performing A/S works, a worker's finger may come into contact with the terminal busbar 320 through the opening 560, which may result in a safety accident, but according to the present invention, the rib 550 is disposed in the opening 560 to prevent the worker's finger from approaching, thereby preventing safety accidents, stably maintaining quality of the battery module 1000, and satisfying IPXXB specified in the International Protection Marking (IP), as illustrated.

Meanwhile, FIG. 10 is a view illustrating a pack busbar 1100 connected to a battery module 1000 according to the present invention.

When connecting the pack busbar 1100 to the terminal busbar 320, the terminal cover 540 may be opened and the pack busbar 1100 may be connected to the terminal busbar 320.

As a specific process of connecting the pack busbar 1100 to the battery module 1000, the terminal cover 540 is firstly rotated around the hinge pin 543a to open the terminal cover 540.

Then, one end of the pack busbar 1100 is placed to overlap on the second portion 322 of the terminal busbar 320 that is mounted on the mounting portion 530 as illustrated. Thereafter, a coupling member such as a pin or bolt is inserted sequentially into a coupling hole 1100a of the pack busbar 1100 and the coupling hole 322a of the second portion 322 in the terminal busbar 320, and then the coupling member is secured to the securing recess 531a of the mounting portion 530 to connect the pack busbar 1100 to the terminal busbar 320.

When the connection between the pack busbar 1100 and the terminal busbar 320 is completed in such a way, the terminal cover 540 may be closed again to cover one end portion of the pack busbar 1100 connected to the second portion 322 of the terminal busbar 320 with the terminal cover 540.

According to the present invention, the rib 550 may be flexible and have tension. As illustrated in Fig. 10, when connecting the pack busbar 1100 to the terminal busbar 320, even if the pack busbar 1100 comes into contact with the rib 550, the rib 550 may be bent or curved since it is formed flexibly, and if there is no contact with the pack busbar 1100 or the like, it may be restored to its original state by a restoring force.

Meanwhile, one or more battery modules 1000 according to the present invention as described above may form a battery pack. The battery pack according to the present invention may accommodate at least one or more battery modules 1000 in a pack case and may include various control and protection systems such as a battery management system (BMS) and a cooling system.

The battery module 1000 and the battery pack according to the present invention configured as described above may be applied to various devices. Specifically, the battery module and the battery pack may be applied to means of transportation such as electric bicycles, electric vehicles, and hybrid vehicle, or energy storage system (ESS), but it is not limited thereto, and the battery module and the battery pack may be applied to various devices that may use secondary batteries.

The present invention has been described with reference to preferred embodiments as described above, but it is not limited to the above embodiments, and various changes and modifications may be made by those skilled in the art to which the present invention pertains within the scope that does not depart from the spirit of the present invention.

### [INDUSTRIAL APPLICABILITY]

The present invention provides a battery module and a battery pack that may ensure safety of workers by preventing workers' fingers from approaching a terminal busbar during product assembly or A/S works.

## Claims

1. A battery module, comprising:
a battery cell stack in which a plurality of battery cells are stacked;
a module case accommodating the battery cell stack;
a terminal busbar disposed on one side of the battery cell stack;
an insulation cover disposed on one side of the module case, one end portion of the terminal busbar being positioned at the insulation cover; and
a rib disposed at the insulation cover, the rib protruding upward outside the one end portion of the terminal busbar.

2. The battery module according to claim 1, wherein the rib is formed unitarily with the insulation cover.

3. The battery module according to claim 1, wherein the rib is disposed at an edge of the insulation cover that extends along a longitudinal direction of the battery module.

4. The battery module according to claim 1, wherein the rib is inclined upward.

5. The battery module according to claim 1, wherein the rib is flexible.

6. The battery module according to claim 1, wherein the insulation cover includes a mounting portion on which the one end portion of the terminal busbar is mounted.

7. The battery module according to claim 6, wherein the rib is disposed on an edge of the mounting portion.

8. The battery module according to claim 7, wherein the mounting portion includes:
a mounting surface portion on which the one end portion of the terminal busbar is mounted;
and
an edge portion disposed outside the mounting surface portion.

9. The battery module according to claim 8, wherein the edge portion of the mounting portion includes:
a first edge portion positioned on a side edge of the mounting portion; and
a second edge portion positioned on a front edge of the mounting portion.

10. The battery module according to claim 9, wherein the rib is disposed at the first edge portion.

11. The battery module according to claim 1, further comprising a terminal cover configured to cover the one end portion of the terminal busbar.

12. The battery module according to claim 11, wherein the terminal cover is configured to be openable and closable.

13. The battery module according to claim 12, wherein the terminal cover is configured to be rotatable about a rotation axis.

14. The battery module according to claim 13, wherein the rotation axis is disposed in parallel to a width direction of the battery module.

15. The battery module according to claim 11, further comprising an opening between a side edge of the insulation cover that extends along a longitudinal direction of the battery module and the terminal cover.

16. The battery module according to claim 15, wherein the rib protrudes toward the opening.

17. The battery module according to claim 16, further comprising a pack busbar connected to the one end portion of the terminal cover.

18. The battery module according to claim 1, wherein the insulation cover includes an opening, and
wherein the one end portion of the terminal busbar is exposed through the opening.

19. The battery module according to claim 1, further comprising an end plate disposed on a front surface or a rear surface of the module case,
wherein the end plate is disposed outside the insulation cover.

20. A battery pack comprising the battery module according to claim 1.
